# EUROPÄISCHE PATENTSCHRIFT

(11) **EP 1 454 116 B1**
(45) Veröffentlichungstag und Bekanntmachung des Hinweises auf die Patenterteilung: **14.03.2007**
(21) Anmeldenummer: 02787880.0
(22) Anmeldetag: 30.11.2002
(51) Int. Cl.: G01F 1/66, G01F 23/296

(54) **FELDGERÄTEELEKTRONIK MIT EINER SENSOREINHEIT FÜR DIE PROZESSMESSTECHNIK**
FIELD DEVICE ELECTRONICS SYSTEM WITH A SENSOR MECHANISM FOR PROCESS MEASUREMENT
SYSTEME ELECTRONIQUE D'APPAREIL DE TERRAIN, COMPORTANT UNE UNITE DE DETECTION, DESTINE A LA TECHNIQUE DE MESURE DES PROCESSUS

(30) Priorität: 12.12.2001 DE 10161071
(43) Veröffentlichungstag der Anmeldung: 08.09.2004
(73) Patentinhaber: Endress + Hauser GmbH + Co. KG, 79689 Maulburg (DE)
(72) Erfinder: HEILIG, Clemens, 77654 Offenburg (DE); DIETERLE, Roland, 79112 St. Georgen (DE)
(74) Vertreter: Andres, Angelika Maria
(86) Internationale Anmeldenummer: PCT/EP2002/013536
(87) Internationale Veröffentlichungsnummer: WO 2003/054489

(56) Entgegenhaltungen:
- EP-A- 0 949 485

## Beschreibung

Die Erfindung bezieht sich auf eine Feldgeräteelektronik mit einer Sensoreinheit für die Prozessmesstechnik gemäß Oberbegriff des Anspruchs 1.

Praktisch bei allen bisher auf dem Markt befindlichen Sensoreinheiten zur Füllstandsbestimmung in Flüssigkeiten und Schüttgütern und zur Durchflussermittlung eines Medium durch ein Rohrsystem, die auf der Basis von elektromechanischen Wandlern (Vibronik) arbeiten, werden sinus- oder rechteckförmige elektrische Wechselspannungssignale als Ansteuersignale für eine Grundwellenanregung der Sensoreinheiten verwendet. Die Wechselsignale werden normalerweise mittels eines analogen Oszillators erzeugt und zur weiteren Verarbeitung analog gefiltert, gleichgerichtet und bei Grenzstandschaltern mittels analoger Komparatoren mit vorgegebenen Schwellwerten verglichen. Mikroprozessoren werden in der Regel nur dazu eingesetzt, die mittels Analogelektronik aufbereiteten Signale zu linearisieren, zu skalieren sowie mit Zeitverzögerungen, Schalthysteresen oder Invertierungen zu versehen.

Die Schwäche dieser Sensoreinheiten zeigt sich bei Ansatzbildung. Bei verschiedenen Medien, z.B. Zement, ist es möglich, dass eine Schicht des Mediums am Sensor haftet, während der Füllstand unter dem Meßniveau liegt. Diese Schicht kann die Schwingung des Sensors soweit dämpfen, dass die Elektronik auf den Zustand "bedeckt" schaltet. Weiterhin kann bei einem Sensor, welcher als Schwinggabel ausgeführt ist, eine unsymmetrische Ansatzbildung dazu führen, dass die Schwingung auf das Gehäuse und den Behälter übertragen wird. Dadurch wird dem Schwingsystem so viel Energie entzogen, dass es unter Umständen vollständig gedämpft wird. Ein solches Verhalten führt ebenfalls zu fehlerhaften Messungen.

EP0949485 offenbart eine Vorrichtung zur Durchflussmessung eines Mediums durch ein Rohr auf der Basis von Zeitdifferenzmessungen von Ultraschallwellen. Eine Elektronik sendet ein pulsartiges Ansteuersignal über einen am Rohr befestigten Wandler durch das Medium. Das über einen weiteren, am Rohr befestigten Wandler empfangene analoge Messsignal wird digital weiterverarbeitet, um die Durchflussgeschwindigkeit des Mediums durch das Rohr zu ermitteln.

Der Erfindung liegt die Aufgabe zugrunde, eine Feldgeräteelektronik zur Grundwellenanregung eines schwingfähigen mechanischen Systems vorzuschlagen, die mit wenigen Bauteilen auskommt und trotzdem viele Möglichkeiten der Messsignalverarbeitung, Messsignalaufbereitung und der Störgrößenkompensation zulässt.

Diese Aufgabe wird erfindungsgemäß durch die Merkmale des Anspruchs 1 gelöst. Die abhängigen Ansprüche betreffen vorteilhafte Aus- und Weiterbildungen der Erfindung.

Der Hauptgedanke der Erfindung besteht darin, Verfahren und Baugruppen der digitalen Signalverarbeitung zur Aufbereitung des analogen Messsignals und zur Erzeugung des Ansteuersignals für die Sensoreinheit zu verwenden. Zu diesem Zweck umfasst die erfindungsgemäße Feldgeräteelektronik zur Erzeugung des Ansteuersignals einen Analog/Digitalwandler, einen digitalen Phasenschieber und einen Digital/Analogwandler, wobei die analogen Messsignale durch den Analog/Digitalwandler digitalisiert und dem Phasenschieber zugeführt werden, und wobei das Ausgangssignal des Phasenschiebers durch den Digital/Analogwandler in das analoge Ansteuersignal für die Sensoreinheit umgewandelt wird.

Bei einer besonders vorteilhaften Ausführungsform der Erfindung ist eine digitale Filtereinheit zur Filterung des digitalisierten Messsignals zwischen dem Analog/Digitalwandler und dem Phasenschieber angeordnet.

Der Phasenschieber umfasst im Wesentlichen einen Ringspeicher in dessen Speicherplätze die digitalisierten und gefilterten Werte des Messsignals nacheinander eingeschrieben werden. Die Phasenverschiebung des Ansteuersignals zum Messsignal wird dadurch erreicht, dass ein Wert, der aus dem Ringspeicher ausgegeben wird, aus einem Speicherplatz ausgelesen wird, welcher eine vorgebbare Anzahl von Speicherplätzen vor oder hinter dem Speicherplatz angeordnet ist, in dem ein aktuell eingelesener Wert gespeichert ist. Dabei repräsentiert die vorgebbare Anzahl von Speicherplätzen einen bestimmten Phasenverschiebungswinkel. Der durch die vorgebbare Anzahl von Speicherplätzen erzeugte Phasenverschiebungswinkel kann ein konstanter Wert sein, der nach oder vor der Inbetriebnahme der Feldgeräteelektronik festgelegt und abgespeichert wird, oder es kann ein variabler Wert sein, der abhägig vom Frequenz- und/oder Amplitudenverhalten des Messsignals veränderbar ist.

Bei einer besonders vorteilhaften Weiterbildung der Erfindung wird auch eine Kompensation von Störgrößen durch Verfahren und Baugruppen der digitalen Signalverarbeitung durchgeführt. Zur Erfassung solcher Störgrößen, beispielsweise einer Ansatzbildung am Sensor, umfasst die Feldgeräteelektronik zusätzlich einen Frequenzmesser zur Ermittlung der Frequenz des Messsignals.

Durch Auswertung der gemessenen Frequenz des Messsignals, wird eine durch Ansatzbildung hervorgerufene Änderung der Resonanzfrequenz des Systems erkannt. Zur Kompensation der Störgrößen umfasst die Feldgeräteelektronik einen regelbaren Verstärker, dessen Verstärkungsfaktor in Abhängigkeit von der ermittelten Resonanzfrequenz des Systems eingestellt wird.

Bei einer Ausführungform der Erfindung ermittelt der Frequenzmesser die Frequenz des Ausgangssignals des Analog/Digitalwandlers und der regelbare Verstärker ist zwischen dem Phasenschieber und dem Digital/Analogwandler oder zwischen dem digitalem Filter und dem Phasenschieber oder zwischen dem Phasenschieber und dem Analog/Digitalwandler angeordnet, wobei der Analog/Digitalwandler beispielsweise durch eine Schmitt-Trigger-Funktion oder durch einen analogen Komperator realisiert ist.

Zur Auswertung des Messsignals und zur Erzeugung eines Ausgangssignals, das einen Zustand 'bedeckt' oder einen Zustand ;nicht bedeckt' repräsentiert, umfasst die Feldgeräteelektronik einen Analog/Digitalwandler und einen Mittelwertbilder und/oder einen Frequenzmesser. Zur Auswertung von Amplitudenänderungen wird zur Erzeugung des Ausgangssignals der Analog/Digitalwandler und der Mittelwertbilder verwendet. Zur Auswertung von Frequenzänderungen und zur Erzeugung des Ausgangssignals wird der Analog/Digitalwandler und Frequenzmesser verwendet.

Bei einer vorteilhaften Ausgestaltung der Erfindung ist die Sensoreinheit als aktiver elektromechanischer Wandler ausgeführt und erzeugt ein Messsignal zur Ermittlung und/oder Überwachung eines Füllstandes eines Mediums in einem Behälter.

Bei einer anderen vorteilhaften Ausgestaltung der Erfindung erzeugt der aktive elektromechanische Wandler einen Messwert zur Ermittlung und/oder Überwachung eines Durchflusses eines Medium durch ein Rohrsystem.

Bei weiteren vorteilhaften Ausgestaltungen der Erfindung ist der aktive elektromechanische Wandler als Schwinggabel oder als Schwingstab ausgeführt, die jeweils eine Antriebseinheit und eine Detektoreinheit umfassen, wobei die Detektoreinheit die analogen Messsignale erzeugt und an die Feldgeräteelektronik weiterleitet, und wobei die Ansteuersignale von der Feldgeräteelektronik an die Antriebseinheit übertragen werden. Es kann auch ein einzelner elektromechanischer Wandler verwendet werden, der gleichzeitig als Antriebs- und Detektoreinheit dient.

Bei einer besondes vorteilhafte Ausführungsform der Erfindung werden die Verfahren und Baugruppen der digitalen Signalverarbeitung durch einen Mikroprozessor realisiert, wobei die zugehörigen Programme zur Ausführung der Funktionen mit dem Mikroprozessor in einer Speichereinheit gespeichert sind. Vorzugsweise führt der Mikroprozessor die Schmitt-Trigger-Funktion und/oder die Frequenzmessung und/oder die Phasenverschiebung und/oder die Verstärkung und/oder die Mittelwertbildung und/oder eine Komparatorfunktion und/oder eine Verstärkungsregelung und/oder eine Erzeugung eines Ausgangssignals aus, wobei der Digital/Analogwandler und/oder der Analog/Digitalwandlung im Mikroprozessor integriert ist.

Nachfolgend wird ein Ausführungsbeispiel der Erfindung anhand der Zeichnungen näher erläutert. Es zeigt:
Fig. 1: in schematischer Darstellung ein Blockschaltbild einer Feldgeräteelektronik;
Fig. 2: in schematischer Darstellung den Signalverlauf am Eingang und am Ausgang eines Analog/Digitalwandlers mit einer Schmitt-Trigger-Funktion;
Fig. 3: Prinzipdarstellung der Realisierung einer digitalen Phasenverschiebung;
Fig. 4: Diagramm des Eingangssignals und des Verstärkungsfaktors bei einer Verstärkungsnachführung;
Fig. 5: Diagramm verschiedener Signalverläufe bei Resonanzfrequenz;
Fig. 6: Diagramm verschiedener Signalverläufe bei einer Resonanzfrequenzsverschiebung.

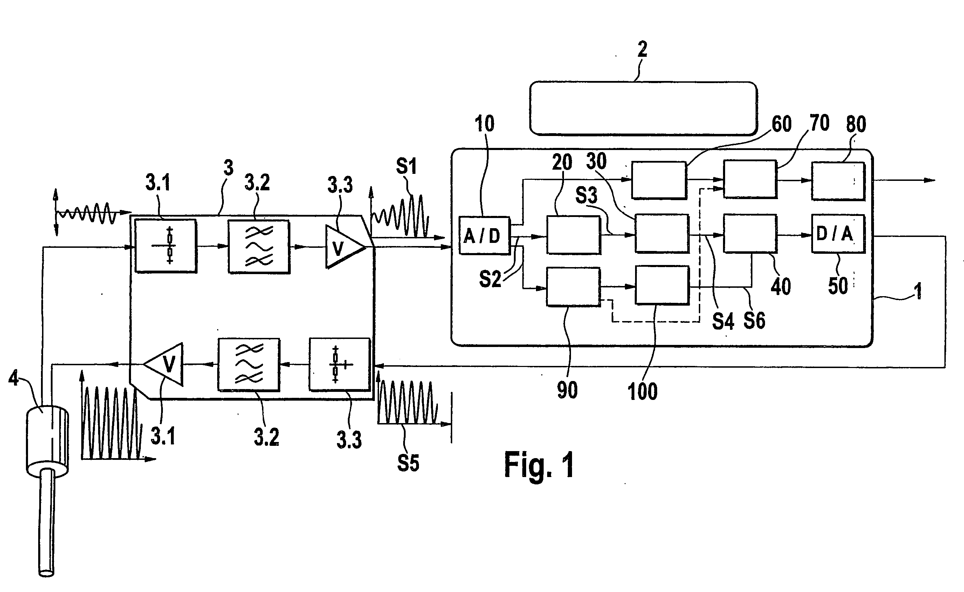

Wie aus Fig. 1 ersichtlich ist umfasst die Feldgeräteelektronik einen Mikroprozessor 1, einen Speicher 2, eine Analogelektronik 3 und einen Sensor 4, welcher als schwingfähiges, mechanisches System ausgeführt ist.

Die Feldgeräteelektronik dient dazu, das schwingfähige, mechanische System 4, durch Grundwellenanregung zum Schwingen zu bringen um damit ein Feldgerät zur Füllstandsmessung oder zur Durchflussmessung zu realisieren. Das eigentliche Prinzip der Grundwellenanregung ist ein bekanntes und bewährtes Verfahren. Das Neue am vorliegenden Prinzip ist, dass ein Teil der Filterung 20, die Auswertung, die Kompensation von Störgrößen und ein damit verknüpfter, dynamischer Verstärkungsalogrithmus mit Verfahren und Baugruppen der digitalen Signalverarbeitung ausgeführt werden, wobei vorzugsweise ein Mikroprozessor 1 verwendet wird.

Wie aus der Fig. 1 weiter ersichtlich ist, sind im Mikroprozessor 1 ein Analog/Digitalwandler 10 und einen Digital/Analogwandler 50 integriert. Zudem führt der Mikroprozessor die Funktionsblöcke digitaler Filter 20, Phasenschieber 30, Verstärker 40, Mittelwertbilder 60, Komperator 70, Erzeugung Ausgangssignal 80, Frequenzmessung 90 und Verstärkungsregelung 100 aus, wobei die zugehörigen Programme zur Ausführung der Funktionsblöcke im Speicher 2 gespeichert sind.

Das schwingfähige, mechanische System umfasst ein Schwingelement und entspechende Anregungselemente und Detektorelemente. Das Schwingelement ist beispielsweise als Schwingstab oder als Schwinggabel mit bekannten Resonanzfrequenzen ausgeführt und wird über ein piezoelektrisches Element zum Schwingen angeregt. Ein aus diesen Schwingungen resultierendes Messsignal wird mittels einem Detektorelement, beispielsweise einem elektromechanischen Wandler der ebenfalls als piezoelektrisches Element ausgeführt ist, detektiert und zur Aufbereitung einer Analogelektronik 3 zugeführt. Die Analogelektronik 3 umfasst zwei Kanäle zur Signalübertragung. Ein Kanal ist der Weg vom Sensor 4 zum Mikroprozessor 1, der andere Kanal ist der Weg vom Mikroprozessor 1 zum Sensor 4. Die Signale werden in beiden Richtungen jeweils mit einer Analogschaltung 3.1 auf ein definiertes Potential angehoben, durch eine Bandpassfilterschaltung 3.2 gefiltert und durch eine Wechselspannungsverstärkerstufe 3.3 verstärkt. Durch die Anhebung um einen definierten Offset kann das Messsignal S1 auch mit einer unsymmetrischen Versorgungsspannung weiterverarbeitet werden. Die Bandpassfilterschaltung 3.2 verhindert das Übertragen von Störfrequenzen.

Der aktuelle Wert des aufbereiteten Messsignal S1 wird von einem Analog/Digitalwandler 10 mit konstanter Samplerate eingelesen, wobei die minimale realisierbare Samplerate zum Einlesen der Analogwerte mindestens um Faktor zwei größer ist, wie die Resonanzfrequenz des Sensors 4. Der Analog/Digitalwandler 10 wandelt den eingelesenen aktuellen Analogwert in einen Digitalwert um. Dieser Digitalwert liegt beispielsweise bei einer Auflösung von 8 Bit zwischen 0 und 255. Ist der Sensor im Ruhezustand, nimmt der Wert den Mittelwert aller möglichen Werte an, bei einer Auflösung von 8 Bit also 128. So erzeugt der Analog/Digitalwandler 10 nach und nach aus dem aufbereiteten Analogsignal S1 ein digitales Signal, welches von einem Mikroprozessorprogramm verarbeitet werden kann, wobei das Analogsignal S1 ständig eingelesen und digitalisiert wird. Der Offset der Analogschaltung 3.1 ist so eingestellt, dass er dem Mittelwert aller Analogwerte, die der Mikroprozessor 1 erkennen kann, entspricht.

Bei der beschriebenen vorteilhaften Ausführungsform der Erfindung, wird das Messsignal S1 durch eine Schmitt - Trigger-Funktion 11 bewertet, die im dargestellten Ausführungsbeipiel Teil des Analog/Digitalwandlers 10 ist. Die Schmitt - Trigger-Funktion 11 bewertet die Richtung der Änderung gegenüber dem Mittelwert. Das bedeutet, dass ein Wert der gleich oder höher liegt als der Mittelwert (z.B. bei einer Auflösung von 8 Bit >=128) als positive Konstante an die nachfolgenden Funktionsblöcke übergeben wird und ein Wert der unter dem Mittelwert liegt (< 128) als negative Konstante an die nachfolgenden Funktionsblöcke übergeben wird. Auf diese Weise wird das analoge Messsignal S1 in ein Rechtecksignal S2 umgewandelt, das in Phase mit dem analogen Messsignal S1 ist und eine Amplitude hat, die dem Wert der Konstanten entspricht. Damit ist die Amplitude des digitalen Rechtecksignals S2 unabhängig von der Höhe des Analogwerts S1 und immer gleich groß.

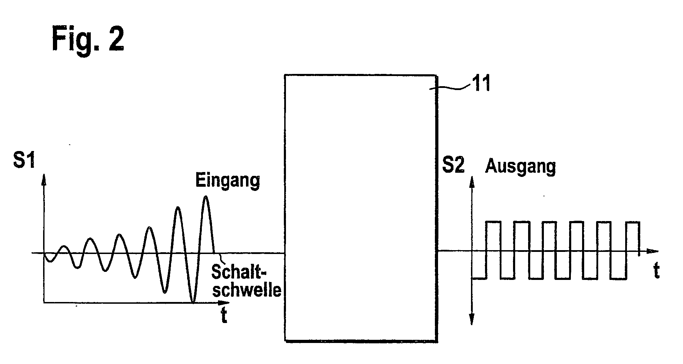

Fig. 2 zeigt das analoge Messsignal S1 vor der Ausführung der Schmitt-Trigger-Funktion 11 und das digitale Rechtecksignal S2 nach der Ausführung der Schmitt-Trigger-Funktion 11. Wie aus der Fig. 2 ersichtlich ist, wird unabhängig von der Amplitude des Messsignals S1 ein Rechtecksignal S2 mit konstanter Amplitude erzeugt. Die Frequenz des Rechtecksignals S2 ist gleich der Frequenz des Messsignals. Der echte digitalisierte Analogwert wird an die Mittelwertbildung 60 übergeben.

Jeder neue Wert des Rechtecksignals S2 wird dem digitalen Filter 20 zugeführt. Das digitale Filter 20 ist vorzugsweise ein Filter 2. Ordnung. Die Filterung verhindert die Übertragung von Fehlerfrequenzen und ein Anschwingen des Sensors 4 in einem höheren Mode. Zudem generiert der digitale Filter 20 aus dem Rechtecksignal S2 wieder ein sinusförmiges Signal S3.

Die von der Filterfunktion 20 berechneten Werte werden nach dem sogenannten first in - first out Verfahren in einen Ringspeicher 31 (FiFo Ringspeicher) geschrieben, der Teil eines Phasenschiebers 30 ist. Durch Festlegung der Ringspeichergröße wird erreicht, dass zu jedem Zeitpunkt die Werte mindestens einer ganzen Schwingungsperiode des Ausgangssignals S3 des digitalen Filters 20 vorliegen. Damit ist es möglich, das gefilterte Signal S3 phasenverschoben wieder auszugeben. Das geschieht, indem man nicht den aktuellen Wert, sondern einen Wert aus dem Ringspeicher 31 ausgibt, welcher in einem Speicherplatz steht, der um eine vorgegebene Anzahl von Speicherplätzen vor dem Speicherplatz steht, in den der aktuelle Wert eingelesen wird. Die vorgebbare Anzahl von Speicherplätzen repräsentiert dann einen bestimmten Phasenverschiebungswinkel. Da sich die Frequenz des Signals aufgrund der Physik niemals ruckartig ändern kann, entspricht ein um einen konstanten Winkel nachfolgender Wert in etwa dem Wert, welcher um den Differenzwert des Winkels zu 360 Grad voreilt. Wird beispielsweise eine Periode des Ausgangssignals S3 des digitalen Filters 20 in 360 Speicherplätze eingelesen, so repräsentiert die vorgegebene Anzahl von 270 Speicherplätzen eine positive Phasenverschiebung von 90 Grad. Mit der Festlegung wieviele Speicherstellen zwischen dem Ausgabewert und dem zuletzt eingelesenen Wert liegen, stellt man somit einen Phasenverschiebungswinkel zwischen Ausgangssignal S4 und Eingangssignal S3 des Phasenschiebers 30 ein. Dadurch ist es möglich das Ausganssignal S4 und damit das Ansteuerungssignal S5 mit einer festlegbaren Phasenverschiebung zum Eingangssignal S3 und damit zum Messsignal S1 auszugeben.

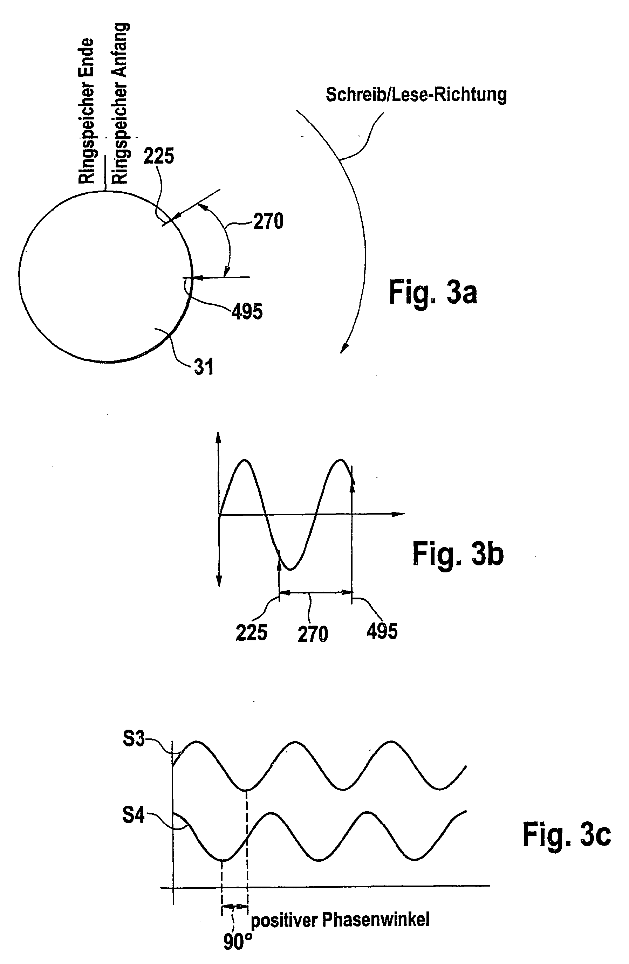

Fig. 3 zeigt die Erzeugung der Phasenverschiebung durch einen Ringspeicher 31.

Wie aus Fig. 3a ersichtlich ist, steht der Zeiger zum Einlesen des aktuellen Wertes auf der Speicherstelle 495, während der Zeiger für den aktuellen Ausgabewert auf der Speicherstelle 225 steht. Somit steht der aktuelle Ausgabewert 270 Speicherzellen vor dem aktuellen Eingabewert und die vorgebbare Anzahl von Speicherzellen ist in diesem Beispiel 270.

Fig 3b zeigt den augenblicklichen Speicherinhalt des Ringspeichers. Im dargestellten Beispiel wird eine Schwingungsperiode in 360 Speicherzellen abgelegt.

Fig. 3c zeigt in einem Diagramm das Eingangssignal S3 und das Ausgabesignal S4 des Phasenschiebers. Wie aus diesem Diagramm ersichtilch ist, eilt das Ausgabesignale S4 dem Eingangssignal S3 bei dem dargestellten Beispiel um 90 Grad voraus. Somit entspricht die vorgegebene Anzahl von 270 Speicherzellen im dargestellten Ausführungsbeispiel einer Phasenverschiebung von 90 Grad.

Der aus dem Phasenschieber 30 ausgelesene Wert wird mit dem aktuellen Verstärkungsfaktor S6 des Verstärkers multipliziert und über den Digital/Analogwandler 50 als Ansteuerungssignal S5 ausgegeben. Das Ansteuerungssignal S5 wird nun ebenfalls von der Analogelektronik 3 aufbereitet und verstärkt. Das daraus resultierende Signal wird einem elektromechanischem Wandler zugeführt und die Eigenschwingung des Sensors 4 wird verstärkt. Auf diese Weise entsteht ein elektromechanischer Schwingkreis und damit eine bis auf eine maximal mögliche Amplitude aufklingende Schwingung. Somit wird das schwingfähige, mechanische System mit seinem eigenen, durch die Phasenverschiebung voreilenden Grundwellensignal, zum Schwingen angeregt. Der elektromechanische Wandler kann beispielsweise als Piezoelement ausgeführt sein und ist an einer geeigneten Stelle am Sensor 4 angebracht.

Das vom Sensor 4 erzeugte Signal ist ein Wechselspannungssignal. Solange der Sensor im Ruhezustand ist, also nicht schwingt, ist die Amplitude des Signals annähernd null. Aber auch die minimalen Bewegungen, welche der Sensor auch im Ruhezustand ausführt, reichen aus um eine Signaländerung zu erzeugen, welche vom Mikroprozessor 1 erkannt wird. Damit wird der Schwingvorgang angeregt.

Die Resonanzfrequenz des Schwingsystems 4 wird ständig gemessen und ausgewertet. Dadurch werden die durch Ansatzbildung hervorgerufenen Frequenzänderungen erkannt. Bei einer Frequenzverschiebung die auf einen Ansatz schließen lässt, wird ein prozessorinterner Verstärkungsfaktor S6 für eine Verstärkerstufe 40 nachgeregelt, um damit die Schwingamplitude des Schwingelements bei Ansatzbildung anzupassen. Zudem erlaubt die Auswertung einer Frequenzänderung beim Einsatz in Flüssigkeiten eine Entscheidung, ob das Schwingsystem bedeckt ist oder nicht.

Zyklisch wird eine Mittelwertberechnung der Amplitude 60 und eine Messsignalauswertung durchgeführt. Die Auswertung des Mittelwerts erlaubt ein Urteil darüber, ob der Sensor bedeckt ist oder nicht.

Die Amplitude und die Frequenz des Eingangssignals S1 im Mikroprozessor 1 geben Auskunft über den Bedeckungszustand, welchen der Sensor 4 momentan erfährt. Diese Auswertung erfolgt über eine Mittelwertberechnung 60 der Absolutwerte einer oder mehrerer Perioden. Taucht der Sensor 4 in das zu messende Medium ein, nimmt die Dämpfung zu und die Amplitude und meist auch die Frequenz der Signale nimmt ab. Die Auswertung des Mittelwerts und/oder der Frequenz zeigt diesen Zustand an und kann eine Reaktion, z.B. ein Alarmsignal, auslösen. Im dargestellten Ausführungsbeispiel erfolgt die Auswertung durch einen Komparator 70, der die aktuellen Werte des Mittelwerts der Absolutwerte und/oder der Resonanzfrequenz mit vorgegebenen Werten vergleicht und ein entsprechendes Signal ("bedeckt" oder "nicht bedeckt") generiert. Aus diesem Komparatorsignal wird im Funktionsblock 80 ein Ausgangssignal erzeugt, wobei auch eine notwendige Anpassung (Skalierung, Invertierung usw.) des Ausgangssignals für die Weitergabe an eine übergeordnete Einheit durchgeführt wird.

Der Funktionsblock 80 erzeugt ein Ausgangssignal, welche von der weiteren Verwendung des Ausgangssignals bzw. vom verwendeten Übertragungsprotokoll abhängig ist. So kann beispielsweise ein 4-20 mA-Signal, ein 0-10V-Signal, ein PFM-Signal (Pulsfrequenzmodulations-Signal), ein binäres Schaltsignal oder ein digitaler Code... usw. erzeugt werden. Es ist aber auch vorstellbar, das der Funktionsblock 80 mehrere Ausgangssignale (4-20 mA, 0-10V, PFM Signal, binäres Schaltsignal... usw.) für verschiedene Übertragungsprotokolle bzw. Verwendungszwecke erzeugt und ausgibt. Zu Erzeugung von bestimmten standardisierten Ausgangssignalen, kann ein Digital/Analogwandler Teil des Funktionsblocks 80 sein oder als eigener Funktionsblock realisiert sein.

Wird der Sensor 4 nicht durch Eintauchen in das zu messende Medium sondern durch Ansatz[ ] gedämpft, kommt zur Abnahme der Signalamplituden ein weiterer Effekt dazu; es verändert sich die Resonanzfrequenz des Systems. Da die Schwingung auf dem Prinzip der Grundwellenanregung erzeugt wird, stellen sich der Sensor 4 und alle Signale auf diese veränderte Frequenz ein. Zwei Effekte können eine Abnahme der Signalamplitude bei Ansatz verursachen; zum einen wird der Sensor 4 durch die Reibung des Ansatzes gedämpft, zum anderen wird bei unsymmetrischen Ansatz ein Teil der Schwingungsenergie auf den Behälter übertragen. Eine empfindlich eingestellte Auswertung würde "bedeckt" melden. Das vorliegende Verfahren erkennt dagegen solch eine Frequenzveränderung durch Ansatzbildung. Nach Unterschreitung eines konstanten Toleranzwertes (Schwelle minimale Amplitude) wird die prozessorinterne Signalverstärkung S6 erhöht. Dies geschieht durch die Vergrößerung eines Faktors, mit welchem der aktuelle Wert der Ausgabe multipliziert wird, solange der Mittelwert der absoluten Eingangsignalwerte unter einem konstanten Wert (Schwelle minimale Amplitude) liegt. Dadurch erfolgt eine zur Abnahme der Resonanzfrequenz proportionale Erhöhung der Kreisverstärkung des Systems. Die Schwingung wird verstärkt und die Auswirkung der Resonanzfrequenzverschiebung auf die Signalamplituden wird kompensiert. Der Mittelwert des absoluten Eingangssignals bleibt über der Schwelle, die den Zustand "bedeckt" markiert, wodurch eine Fehlmessung verhindert wird.

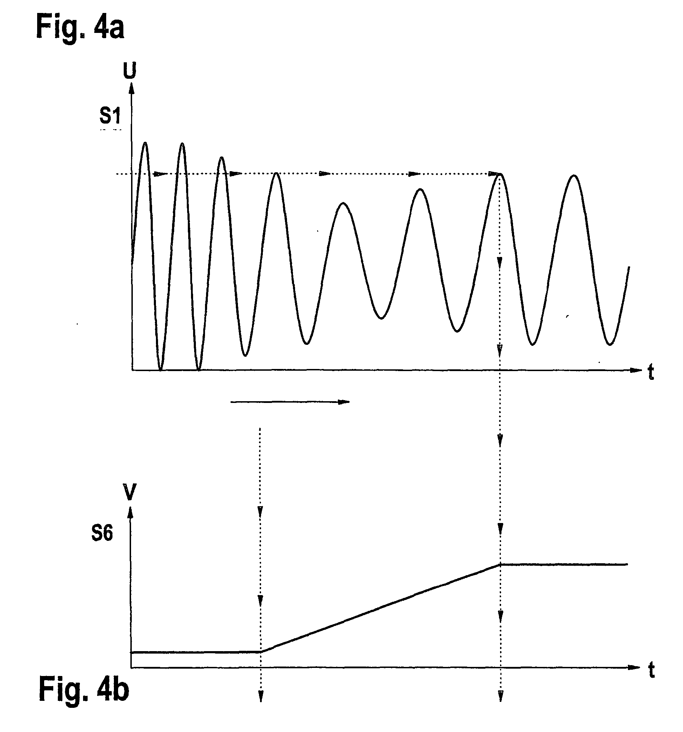

Fig. 4 zeigt den beschriebenen Zusammenhang zwischen der Resonanzfrequenzverschiebung beim Eingangssignal S1 (oberes Diagramm) und dem von der Verstärkungsregelung 100 eingestellten Verstärkungsfaktor S6 (unteres Diagramm) Der Verstärkungsfaktor S6 wird dabei solange erhöht, bis die Schwelle einer minimalen Amplitude wieder erreicht wird.

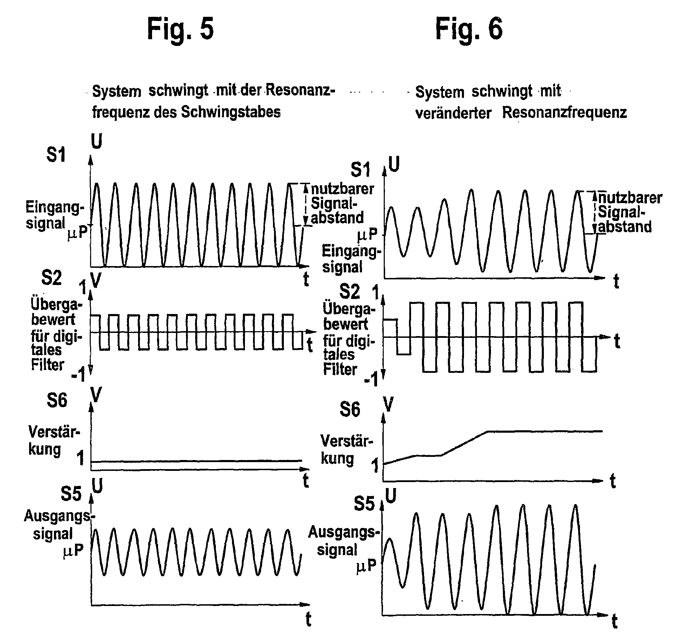

Die Fig. 5 und Fig. 6 zeigen die Signalverläufe des Messsignals S1, des Aussgangssignals S2 der Schmitt-Trigger-Funktion bzw. des Übergabesignals S2 an das digitale Filter 20, des Verstärkungsfaktors S6 und des Ansteuersignals S5, wobei Fig. 5 die Signalverläufe bei Resonazfrequenz und Fig. 6 die Signalverläufe bei veränderter Resonanzfrequenz darstellt.

Durch eine prozessorinterne Dämpfung der Basisverstärkung wird das Verfahren weiter verbessert. Die Basisverstärkung ist der Faktor mit dem ankommende, analoge Messsignale S1 am Prozessoreingang bewertet werden. Die Schmitt-Trigger-Funktion 11 wird so eingestellt, dass sie als Absolutwert für ankommende Signale, d. h. für die Amplitude des Rechtecksignals S2, nicht den maximal möglichen Wert, z. B. 256 bei 8 Bit, übergibt. Statt dessen wird der Wert auf eine Größe gesetzt, z. B. 128 bei 8 Bit, welche ohne Veränderung des Verstärkungsfaktors durch Frequenzverschiebung am Sensor 4 eine bestimmte Amplitude einstellt. Diese Amplitude entspricht in etwa der selben Amplitude, die der Sensor 4, bei einer realistisch möglichen Ansatzbildung, mit maximaler Verstärkung erreichen kann. Im Diagramm (S2 in Fig. 5 bzw. Fig. 6) sind die dargestellten Signale auf den Maximalwert (z.B. 256 bei 8 Bit) normiert, d. h. die Basisverstärkung in Fig. 5 beträgt 0,5 und die Basisverstärkung in Fig. 6 beträgt 1. Trotz dieser Dämpfung der Basisverstärkung bleibt genug Spielraum für eine hohe Meßempfindlichkeit des Gesamtsystems. Wird eine große Frequenzänderung des Systems durch Ansatzbildung erkannt (siehe Messsignal S1 in Fig. 6), wird die interne Dämpfung zurückgenommen und die Amplitude des Rechtecksignals S2 mit Faktor eins übergeben (siehe S2 in Fig. 6). Damit erhöht sich die Amplitude der Anregung (Ansteuerungssignal S5 in Fig. 6) schlagartig, wodurch der Dämpfung der mechanischen Schwingung entgegengewirkt wird. Dieser Effekt und die proportionale Erhöhung des internen Verstärkungsfaktors S6 (siehe S6 in Fig. 5 bzw. Fig. 6) ergeben eine Nachregelung des Verstärkungsverhaltens mit PI - ähnlichem Charakter.

Die Tatsache, dass die Amplitude im unbedeckten Fall ohne Ansatz etwa gleich groß ist, wie die Amplitude, welche sich mit Hilfe der Nachregelung bei Ansatzbildung einstellt, hat einen weiteren positiven Effekt. Dieser Angleich ermöglicht es, dass in beiden Fällen - mit und ohne Ansatz - die Empfindlichkeit der Messung konstant bleibt, da der nutzbare Signalabstand gleich groß ist.

## Patentansprüche

1. Feldgeräteelektronik mit einer Sensoreinheit (4) für die Prozessmesstechnik, wobei die Feldgeräteelektronik über entsprechende Signalwege mit der Sensoreinheit (4) verbunden ist, und wobei die Feldgeräteelektronik analoge Messsignale (S1) der Sensoreinheit (4) empfängt und analoge Ansteuersignale (S5) zur Grundwellenanregung der Sensoreinheit (4) erzeugt und an die Sensoreinheit (4) überträgt,
**dadurch gekennzeichnet,**
**dass** zur Erzeugung des Ansteuersignals (S5) ein Analog/Digitalwandler (10), ein digitaler Phasenschieber (30) und ein Digital/Analogwandler (50) vorhanden sind, wobei die analogen Messsignale (S1) durch den Analog/Digitalwandler (10) digitalisiert und dem digitalen Phasenschieber (30) zugeführt werden, und wobei das Ausgangssignal (S4) des Phasenschiebers (30) durch den Digital/Analogwandler (50) in das analoge Ansteuersignal (S5) für die Sensoreinheit (4) umgewandelt wird.

2. Feldgeräteelektronik nach Anspruch 1,
**dadurch gekennzeichnet,**
**dass** zwischen dem Analog/Digitalwandler (10) und dem digitalen Phasenschieber (30) eine digitale Filtereinheit (20) angeordnet ist.

3. Feldgeräteelektronik nach Anspruch 1 oder 2,
**dadurch gekennzeichnet,**
**dass** der digitale Phasenschieber (30) einen Ringspeicher (31) umfasst, wobei die Werte des Messsignals (S1) nacheinander in Speicherplätze des Ringspeichers (31) eingeschrieben werden, wobei die Phasenverschiebung des Ansteuersignals (S5) zum Messsignal (S1) **dadurch** erreicht wird, dass ein Wert, der aus dem Phasenschieber (30) ausgegeben wird, aus einem Speicherplatz des Ringspeichers (31) ausgelesen wird, welcher eine vorgebbare Anzahl von Speicherplätzen vor oder hinter dem Speicherplatz angeordnet ist, in dem ein aktuell eingelesener Wert gespeichert ist, wobei die vorgebbare Anzahl von Speicherplätzen einen bestimmten Phasenverschiebungswinkel repräsentiert.

4. Feldgeräteelektronik nach Anspruch 3,
**dadurch gekennzeichnet,**
**dass** die vorgebbare Anzahl von Speicherplätzen zur Erzeugung der Phasenverschiebung ein konstanter Wert ist.

5. Feldgeräteelektronik nach Anspruch 3,
**dadurch gekennzeichnet,**
**dass** die vorgebbare Anzahl von Speicherplätzen zur Erzeugung der Phasenverschiebung ein variabler Wert ist, welcher vom Frequenz und/oder Amlitudenverhalten des Messsignals (S5) abhängig ist.

6. Feldgeräteelektronik nach einem der Ansprüche 1 bis 5,
**dadurch gekennzeichnet,**
**dass** die Feldgeräteelektronik zur Kompensation von Störgrößen zusätzlich einen Frequenzmesser (90) zur Ermittlung der Frequenz des Messsignals (S1) und einen regelbaren Verstärker (40) umfasst, wobei der Verstärkungsfaktor (S6) des regelbaren Verstärkers (40) in Abhängigkeit von der ermittelten Frequenz eingestellt wird.

7. Feldgeräteelektronik nach Anspruch 6,
**dadurch gekennzeichnet,**
**dass** der Frequenzmesser (90) die Frequenz des Ausgangssignals (S2) des Analog/Digitalwandlers. (10) ermittelt und der regelbare Verstärker (40) zwischen Phasenschieber (30) und Digital-/Analogwandler (50) oder zwischen digitalem Filter (20) und Phasenschieber (30) oder zwischen Phasenschieber (30) und Analog/Digitalwandler (10) angeordnet ist.

8. Feldgeräteelektronik nach einem der vorherigen Ansprüche,
**dadurch gekennzeichnet,**
**dass** derAnalog/Digitalwandler (10) durch eine Schmitt-Trigger-Funktion (11) oder durch einen analogen Komperator realisiert ist.

9. Feldgeräteelektronik nach einem der vorherigen Ansprüche,
**dadurch gekennzeichnet,**
**dass** die Feldgeräteelektronik zur Auswertung des Messsignals (S1) einen Analog-/Digitalwandler (10), einen Mittelwertbilder (60) und einen Komparator (70) und/oder einen Frequenzmesser (90) umfasst, wobei zur Auswertung von Amplitudenänderungen der Analog-/Digitalwandler (10) und der Mittelwertbilder (60) und der Komparator (70) zur Erzeugung des Ausgangssignals verwendet werden, und wobei zur Auswertung von Frequenzänderungen zur Erzeugung des Ausgangssignals der Frequenzmesser (70) und der Komparator (70) verwendet wird.

10. Feldgeräteelektronik nach Anspruch 9,
**dadurch gekennzeichnet,**
**dass** das Ausgangssignal einen Zustand 'bedeckt' oder einen Zustand 'nicht bedeckt' repräsentiert.

11. Feldgeräteelektronik nach einem der vorherigen Ansprüche,
**dadurch gekennzeichnet,**
**dass** die Sensoreinheit (4) als aktiver elektromechanischer Wandler ausgeführt ist.

12. Feldgeräteelektronik nach Anspruch 11,
**dadurch gekennzeichnet,**
**dass** der elektromechanische Wandler ein Messsignal (S1) zur Ermittlung und/oder Überwachung eines Füllstandes eines Mediums in einem Behälter erzeugt.

13. Feldgeräteelektronik nach Anspruch 11,
**dadurch gekennzeichnet,**
**dass** der elektromechanische Wandler einen Messwert (S1) zur Ermittlung und/oder Überwachung eines Durchflusses eines Medium durch ein Rohrsystem erzeugt.

14. Feldgeräteelektronik nach einem der Ansprüche 11 bis 13,
**dadurch gekennzeichnet,**
**dass** der aktive elektromechanische Wandler als eine Schwinggabel mit einer Antriebseinheit und einer Detektoreinheit ausgeführt ist, wobei die Detektoreinheit die analogen Messsignale (S1) erzeugt und an die Feldgeräteelektronik weiterleitet, und wobei die Ansteuersignale (S5) von der Feldgeräteelektronik an die Antriebseinheit übertragen werden.

15. Feldgeräteelektronik nach einem der Ansprüche 11 bis 14,
**dadurch gekennzeichnet,**
**dass** der aktive elektromechanische Wandler als Schwingstab mit einer Antriebseinheit und einer Detektoreinheit ausgeführt ist, wobei die Detektoreinheit die analogen Messsignale (S1) erzeugt und an die Feldgeräteelektronik weiterleitet, und wobei die Ansteuersignale (S5) von der Feldgeräteelektronik an die Antriebseinheit übertragen werden.

16. Feldgeräteelektronik nach einem der vorherigen Ansprüche,
**dadurch gekennzeichnet,**
**dass** ein Mikroprozessor (1) zur Ausführung der Schmitt-Trigger-Funktion (11) und/oder der Frequenzmessung (90) und/oder der Phasenverschiebung (30) und/oder der Verstärkung (40) und/oder der Mittelwertbildung (60) und/oder einer Komparatorfunkiton (70) und/oder einer Verstärkungsregelung (100) und/oder einer Erzeugung eines Ausgangssignals (80) vorhanden ist.

17. Feldgeräteelektronik nach einem der vorherigen Ansprüche,
**dadurch gekennzeichnet,**
**dass** der Digital/Analogwandler (10) und/oder der Analog/Digitalwandler (50) und/oder der analoge Komperator im Mikroprozessor (1) integriert ist.

## Claims

1. A field device electronic system comprising a sensor unit (4) for process measuring technology, the field device electronic system being connected to the sensor unit (4) via corresponding signal paths, and the field device electronic system receiving analogue measuring signals (S1) of the sensor unit (4) and producing analogue control signals (S5) for fundamental wave excitation of the sensor unit (4) and transmitting them to the sensor unit (4),
**characterised**
**in that**, in order to produce the control signal (S5), an analogue-to-digital converter (10), a digital phase shifter (30) and a digital-to-analogue converter (50) are present, the analogue measuring signals (S1) being digitised by the analogue-to-digital converter (10) and supplied to the digital phase shifter (30), and the output signal (S4) of the phase shifter (30) being converted by the digital-to-analogue converter (50) into the analogue control signal (S5) for the sensor unit (4).

2. A field device electronic system according to Claim 1,
**characterised**
**in that** a digital filter unit (20) is disposed between the analogue-to-digital converter (10) and the digital phase shifter (30).

3. A field device electronic system according to Claim 1 or 2,
**characterised**
**in that** the digital phase shifter (30) comprises a ring memory (31), the values of the measuring signal (S1) being written consecutively into memory locations of the ring memory (31), the phase shift of the control signal (S5) relative to the measuring signal (S1) being achieved by a value, output from the phase shifter (30), being read out from a memory location of the ring memory (31) which is disposed a predeterminable number of memory locations before or after the memory location in which a currently read-in value is stored, the predeterminable number of memory locations representing a certain phase shift angle.

4. A field device electronic system according to Claim 3,
**characterised**
**in that** the predeterminable number of memory locations for producing the phase shift is a constant value.

5. A field device electronic system according to Claim 3,
**characterised in that** the predeterminable number of memory locations for producing the phase shift is a variable value which is dependent on the frequency and/or amplitude behaviour of the measuring signal (S5).

6. A field device electronic system according to one of Claims 1 to 5,
**characterised**
**in that** the field device electronic system for the compensation of disturbance variables additionally comprises a frequency meter (90) for ascertaining the frequency of the measuring signal (S1) and an adjustable amplifier (40), the amplification factor (S6) of the adjustable amplifier (40) being adjusted in dependence on the ascertained frequency.

7. A field device electronic system according to Claim 6,
**characterised**
**in that** the frequency meter (90) ascertains the frequency of the output signal (S2) of the analogue-to-digital converter (10) and the adjustable amplifier (40) is disposed between the phase shifter (30) and the digital-to-analogue converter (50) or between the digital filter (20) and the phase shifter (30) or between the phase shifter (30) and the analogue-to-digital converter (10).

8. A field device electronic system according to one of the preceding claims,
**characterised**
**in that** the analogue-to-digital converter (10) is implemented by means of a Schmitt trigger function (11) or by means of an analogue comparator.

9. A field device electronic system according to one of the preceding claims,
**characterised**
**in that** the field device electronic system for evaluating the measuring signal (S1) comprises an analogue-to-digital converter (10), an averaging unit (60) and a comparator (70) and/or a frequency meter (90), wherein, in order to evaluate amplitude changes, the analogue-to-digital converter (10) and the averaging unit (60) and the comparator (70) are used to produce the output signal, and wherein, in order to evaluate frequency changes, the frequency meter (70) and the comparator (70) are used to produce the output signal.

10. A field device electronic system according to Claim 9,
**characterised**
**in that** the output signal represents a 'covered' state or a 'not covered' state.

11. A field device electronic system according to one of the preceding claims,
**characterised**
**in that** the sensor unit (4) is in the form of an active electromechanical transducer.

12. A field device electronic system according to Claim 11,
**characterised in that** the electromechanical transducer produces a measuring signal (S1) for ascertaining and/or monitoring a fill level of a medium in a container.

13. A field device electronic system according to Claim 11,
**characterised**
**in that** the electromechanical transducer produces a measurement value (S1) for ascertaining and/or monitoring a flow rate of a medium through a pipe system.

14. A field device electronic system according to one of Claims 11 to 13,
**characterised**
**in that** the active electromechanical transducer is in the form of an oscillating fork with a drive unit and a detector unit, the detector unit producing the analogue measuring signals (S1) and forwarding them to the field device electronic system, and the control signals (S5) being transmitted by the field device electronic system to the drive unit.

15. A field device electronic system according to one of Claims 11 to 14,
**characterised**
**in that** the active electromechanical transducer is in the form of an oscillating rod with a drive unit and a detector unit, the detector unit producing the analogue measuring signals (S1) and forwarding them to the field device electronic system, and the control signals (S5) being transmitted by the field device electronic system to the drive unit.

16. A field device electronic system according to one of the preceding claims,
**characterised**
**in that** a microprocessor (1) is present for performing the Schmitt trigger function (11) and/or the frequency measurement (90) and/or the phase shift (30) and/or the amplification (40) and/or the averaging (60) and/or a comparator function (70) and/or an amplification adjustment (100) and/or production of an output signal (80).

17. A field device electronic system according to one of the preceding claims,
**characterised**
**in that** the digital-to-analogue converter (10) and/or the analogue-to-digital converter (50) and/or the analogue comparator is integrated in the microprocessor (1).

## Revendications

1. Électronique d'appareil de terrain munie d'une unité de capteur (4) pour la technique de mesure de process, l'électronique d'appareil de terrain étant reliée à l'unité de capteur (4) par l'intermédiaire de voies de signal appropriées, et l'électronique d'appareil de terrain recevant les signaux de mesure analogiques (S1) de l'unité de capteur (4) et générant des signaux de commande analogiques (S5) en vue de l'excitation de l'onde fondamentale de l'unité de capteur (4), qui sont transmis à l'unité de capteur (4),
**caractérisée en ce**
**qu'**un convertisseur analogique-numérique (10), un module déphaseur numérique (30) et un convertisseur numérique-analogique (50) sont destinés à la génération du signal de commande (S5), les signaux de mesure analogiques (S1) étant numérisés par le convertisseur analogique-numérique (10) et acheminés au module déphaseur numérique (30), et le signal de sortie (S4) du module déphaseur (30) étant converti par le convertisseur numérique-analogique (50) en un signal de commande analogique (S5) pour l'unité de capteur (4).

2. Électronique d'appareil de terrain selon la revendication 1,
**caractérisée en ce**
**qu'**une unité de filtrage (20) est disposée entre le convertisseur analogique-numérique (10) et le module déphaseur numérique (30).

3. Électronique d'appareil de terrain selon la revendication 1 ou 2,
**caractérisée en ce**
**que** le module déphaseur numérique (30) comprend une mémoire circulaire (31), les valeurs du signal de mesure (S1) étant écrites successivement dans les emplacements de la mémoire circulaire (31), et où le déphasage du signal de commande (S5) par rapport au signal de mesure (S1) est obtenu par le fait qu'une valeur, qui est sortie par le module déphaseur (30), est lue depuis un emplacement de la mémoire circulaire (31), laquelle valeur est disposée selon un nombre prédéfinissable d'emplacements de mémoire avant ou après l'emplacement de mémoire, dans lequel est enregistrée une valeur actuellement lue, le nombre prédéfinissable d'emplacements de mémoire représentant un angle de déphasage déterminé.

4. Électronique d'appareil de terrain selon la revendication 3,
**caractérisée en ce**
**que** le nombre prédéfinissable d'emplacements de mémoire destiné à générer le déphasage est une valeur constante.

5. Électronique d'appareil de terrain selon la revendication 3,
**caractérisée en ce**
**que** le nombre prédéfinissable d'emplacements de mémoire destiné à générer le déphasage est une valeur variable, qui dépend de la fréquence et/ou du comportement en amplitude du signal de mesure (S5).

6. Électronique d'appareil de terrain selon l'une des revendications 1 à 5,
**caractérisée en ce**
**que** l'électronique d'appareil de terrain comprend en plus, pour la compensation de grandeurs perturbatrices, un fréquencemètre (90) destiné à déterminer la fréquence du signal de mesure (S1) et un amplificateur réglable (40), le facteur d'amplification (S6) de l'amplificateur réglable (40) étant réglé en fonction de la fréquence déterminée.

7. Électronique d'appareil de terrain selon la revendication 6,
**caractérisée en ce**
**que** le fréquencemètre (90) détermine la fréquence du signal de sortie (S2) du convertisseur analogique-numérique (10) et que l'amplificateur réglable (40) est disposé entre le module déphaseur (30) et le convertisseur numérique-analogique (50) ou entre le filtre numérique (20) et le module déphaseur (30) ou entre le module déphaseur (30) et le convertisseur analogique-numérique (10).

8. Électronique d'appareil de terrain selon l'une des revendications précédentes,
**caractérisée en ce**
**que** le convertisseur analogique-numérique (10) est réalisé par une fonction de trigger de Schmitt (11) ou par un comparateur analogique.

9. Électronique d'appareil de terrain selon l'une des revendications précédentes,
**caractérisée en ce**
**que** l'électronique d'appareil de terrain comprend, pour l'interprétation du signal de mesure (S1), un convertisseur analogique-numérique (10), un module moyenneur (60) et un comparateur (70) et/ou un fréquencemètre (90), le convertisseur analogique-numérique (10), le module moyenneur (60) et le comparateur (70) étant utilisés pour la génération du signal de sortie en vue de l'interprétation de changements d'amplitude, et le fréquencemètre (90) et le comparateur (70) étant utilisés pour la génération du signal de sortie en vue de l'interprétation de changements de fréquence.

10. Électronique d'appareil de terrain selon la revendication 9,
**caractérisée en ce**
**que** le signal de sortie représente un état "recouvert" ou un état "non recouvert".

11. Électronique d'appareil de terrain selon l'une des revendications précédentes,
**caractérisée en ce**
**que** l'unité de capteur (4) est exécutée en tant que convertisseur électromécanique actif.

12. Électronique d'appareil de terrain selon la revendication 11,
**caractérisée en ce**
**que** le convertisseur électromécanique génère un signal de mesure (S1) destiné à la détermination et/ou la surveillance du niveau d'un produit dans un réservoir.

13. Électronique d'appareil de terrain selon la revendication 11,
**caractérisée en ce**
**que** le convertisseur électromécanique génère une valeur de mesure (S1) destinée à la détermination et/ou la surveillance du débit d'un produit s'écoulant à travers un système de conduite.

14. Électronique d'appareil de terrain selon l'une des revendications 11 à 13,
**caractérisée en ce**
**que** le convertisseur électromécanique actif est exécuté en tant que fourchette vibrante, avec une unité d'entraînement et une unité de détection, l'unité de détection générant les signaux de mesure analogiques (S1) et les transmettant à l'électronique d'appareil de terrain, et les signaux de commande (S5) étant transmis par l'électronique d'appareil de terrain à l'unité d'entraînement.

15. Électronique d'appareil de terrain selon l'une des revendications 11 à 14,
**caractérisée en ce**
**que** le convertisseur électromécanique actif est exécuté en tant que tige vibrante, avec une unité d'entraînement et une unité de détection, l'unité de détection générant les signaux de mesure analogiques (S1) et les transmettant à l'électronique d'appareil de terrain, et les signaux de commande (S5) étant transmis par l'électronique d'appareil de terrain à l'unité d'entraînement.

16. Électronique d'appareil de terrain selon l'une des revendications précédentes,
**caractérisée en ce**
**qu'**un microprocesseur (1) est présent, lequel est destiné à exécuter la fonction de trigger de Schmitt (11) et/ou la mesure de fréquence (90) et/ou le déphasage (30) et/ou l'amplification (40) et/ou la formation de moyenne (60) et/ou une fonction de comparaison (70) et/ou une régulation d'amplification (100) et/ou la génération d'un signal de sortie (80).

17. Électronique d'appareil de terrain selon l'une des revendications précédentes,
**caractérisée en ce**
**que** le convertisseur numérique-analogique (10) et/ou le convertisseur analogique-numérique (50) et/ou le comparateur analogique (70) sont intégrés dans le microprocesseur (1).
